Europäisches Patentamt

European Patent Office

Office européen des brevets

(11) Publication number: **0 419 142 A2**

# EUROPEAN PATENT APPLICATION

(21) Application number: 90310066.7

(22) Date of filing: 14.09.90

(51) Int. Cl.⁵: **B29D 30/08**

(30) Priority: 18.09.89 JP 239913/89

(43) Date of publication of application:
27.03.91 Bulletin 91/13

(84) Designated Contracting States:
DE ES FR GB IT

(71) Applicant: **Bridgestone Corporation**
**10-1, Kyobashi 1-Chome Chuo-Ku**
**Tokyo 104(JP)**

(72) Inventor: **Motomura, Kenichi, c/o Bridgestone**
**Corp.**
**Amagi Factory, 2011, Oaza-Oda**
Amagi-shi, Fukuoka-ken(JP)
Inventor: **Imai, Yoshimasa, c/o Bridgestone**
**Corp.**
**Technical Center, 3-1-1, Ogawahigashi-cho**
**Kodaira-shi, Tokyo(JP)**
Inventor: **Nishimoto, Kichinosuke, c/o**
**Bridgestone Corp.**
**Technical Center, 3-1-1, Ogawahigashi-cho**
**Kodaira-shi, Tokyo(JP)**

(74) Representative: **Silverman, Warren et al**
**HASELTINE LAKE & CO. Hazlitt House 28**
**Southampton Buildings Chancery Lane**
**London WC2A 1AT(GB)**

(54) Method for manufacturing tyres.

(57) A method for forming a green tyre assembling tyre constituent elements such as a carcass ply, side treads, a belt, a top tread, rubber cushion members and the like. This method comprises the steps of presetting a plurality of elements of rubber cushion material, preliminarily severed into a plurality of pieces, onto at least both side portions of the belt and at predetermined positions on the carcass ply respectively and, with the carcass ply wrapped around a forming drum, simultaneously folding back the side portions of the carcass ply as well as the side treads superposed on the side portion to shape these into a predetermined shape on the forming drum, and then sticking a BT-band comprising the belt and the top tread to a predetermined position on the predetermined shape. Accordingly, tyres with a reproducible quality can be manufactured, and tyre production efficiency can be enhanced.

FIG.6

# METHOD FOR MANUFACTURING TYRES

The present invention relates to a method for manufacturing tyres, and more particularly to a process of assembling constituent elements of a tyre for a motorcar or other vehicle.

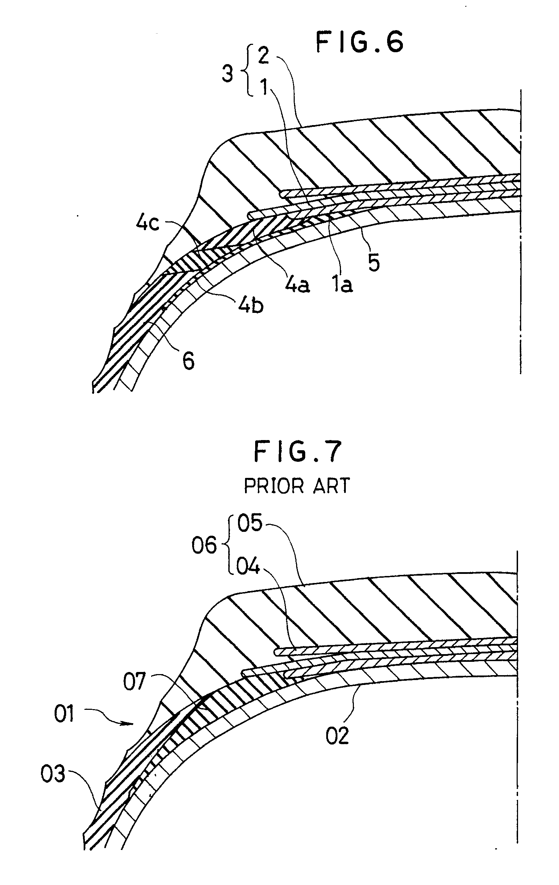

Figure 7 of the accompanying drawings shows a cross-section of part of a radial tyre 01 manufactured by a method known in the prior art. A carcass ply 02 lined with an inner liner which forms the inner surface of a tyre, is subjected to shaping into a toroidal form. Both side portions of the carcass ply 02 are covered by side treads 03, and a crown portion is surrounded by a BT-band 06 consisting of a belt 04 and a top tread 05. A rubber cushion 07 is embedded in a shoulder portion extending from the side portion to the crown portion member.

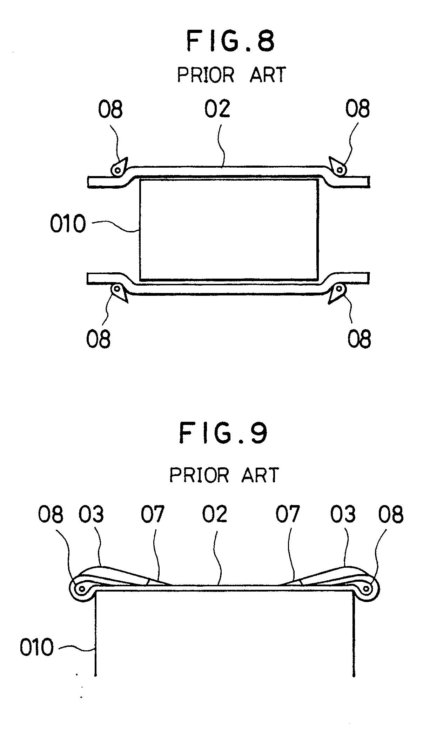

Next, a brief description will be made, with reference to Figs. 8 to 11 of the accompanying drawings, of one known method for manufacturing such radial tyres 01 (Official Gazette of Laid-Open Japanese Patent Specification No. 59-124408 (1984)).

Firstly, the carcass ply 02 is applied onto a first drum 010 to extend from the drum on either side of the latter. It is then folded or flanged a little along the edges of the drum at the drum ends and beads 08 are inserted into the folded portions (See Fig. 8).

The extended portions on either side of the carcass ply 02 are folded back on themselves so as to wrap around these beads 08, and side treads 03 are applied to cover the folded-back portions thus forming a base green case (See Fig. 9). It is to be noted that preset rubber cushion rubber members 07 are located at the end portions of the side treads 03.

Thereafter, the base green case is extracted by reducing the outer diameter of the first drum 010, followed by placing the green case on a second drum assembly 011. The second drum assembly 011 comprises a pair of left and right drum bodies, opposed to each other along their axial direction.

The BT-band 06 is preliminary formed by sequentially wrapping first to third (or higher order) belts around a BT drum, superposed on one another and further sticking a top tread 05 thereto in superposition. The thus formed BT-band 06 is extracted from the BT-drum by reducing the outer diameter of the BT-drum, and is then positioned around the outer circumference of the base green case set on the above-mentioned second drum assembly 011.

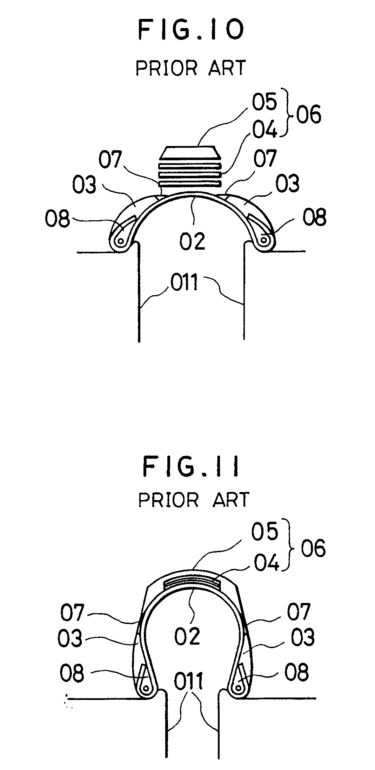

Subsequently, the left and right drum bodies of the second drum assembly 011 are made to approach each other and air is made to flow into the space between the respective drum bodies. This causes the central portion of the carcass ply 02 to expand outwards (see Fig. 10), and eventually the carcass ply 02 deforms into a toroidal shape and joins with the BT-band 06 (See Fig. 11).

In this way a green tyre is manufactured, and subsequently it is loaded into a tyre vulcanizing machine and hardened, thereby producing a radial tyre 01.

However, since the expansion of the base green case shown in Fig. 11 presents an extremely large expansion rate, of about 200% there is a possibility that the rubber cushion members 07 bonded to the carcass ply 02 may peel off, or that elongation of the cushion rubber members 07 may not be effected, uniformly and an unevenness in thickness may arise.

In addition, when thick members such as the rubber cushion members 07 are bonded to the carcass ply 02 at laterally symmetrical positions and made to expand jointly with the carcass ply, there is a possibility that the base green case may expand into a distorted shape. This is due to different expansion rates between the left side and the right side caused by an unevenness in thickness of the rubber cushion members 07, and therefore deviation may also arise in the sticking position to be presented to the BT-band.

Furthermore, since the steps of folding the side treads 03, bonding, transferring the base green case from the first drum 010 to the second drum assembly 011 and expanding the same must be effected sequentially, a high productivity rate cannot be expected.

An object of the invention is run to provide a method of efficiently manufacturing tyres having reproducible quality, in which bonding positions of rubber cushion members can be set with high precision.

According to the present invention there is provided a method for producing tyres each having a carcass ply, side treads, a belt, a top tread and rubber cushion members embedded in tyre shoulder portions, comprising

    i) presetting a plurality of elements of rubber cushion material onto at least both side portions of said belt and at predetermined positions on said carcass ply,

    ii) with the carcass ply wrapped around a forming drum simultaneously folding back said side portions of said carcass ply and said side treads onto said side portions to thus form a predetermined shape on said forming drum, and

    iii) sticking a BT-band comprising said belt and said top tread to a predetermined position on said shape.

Since a rubber cushion members are pre-positioned at predetermined positions on the belt and the carcass ply, the precision of positioning of the bonding to rubber cushion members is improved, and tyres with a reproductive quality can be manufactured.

If a carcass ply, side treads and the like are set on a forming drum and a BT-band is set on the outer circumference of these members, then shaping, folding-back of side treads and sticking of a BT-band can be achieved almost simultaneously, and so productivity is remarkably improved.

For a better understanding of the invention and to show how the same may be carried into effect, reference will now be made, by way of example only, to Figures 1 to 6 of the accompanying drawings, in which:

Figs. 1 is a view in cross-section showing the respective constituent elements of a tyre set on a forming drum in a method for manufacturing tyres according to one preferred embodiment of the present invention;

Fig. 2 is a partial cross-sectional view of a BT-band;

Figs. 3 to 5 are cross-sectional views showing successive steps in a process of manufacturing a green tyre according to the present invention; and

Fig. 6 is a cross-sectional view of part of a tyre manufactured through the same methods.

In the method of manufacturing tyres according to the illustrated embodiment, assembly of constituent elements is effected simultaneously by means of a single forming drum.

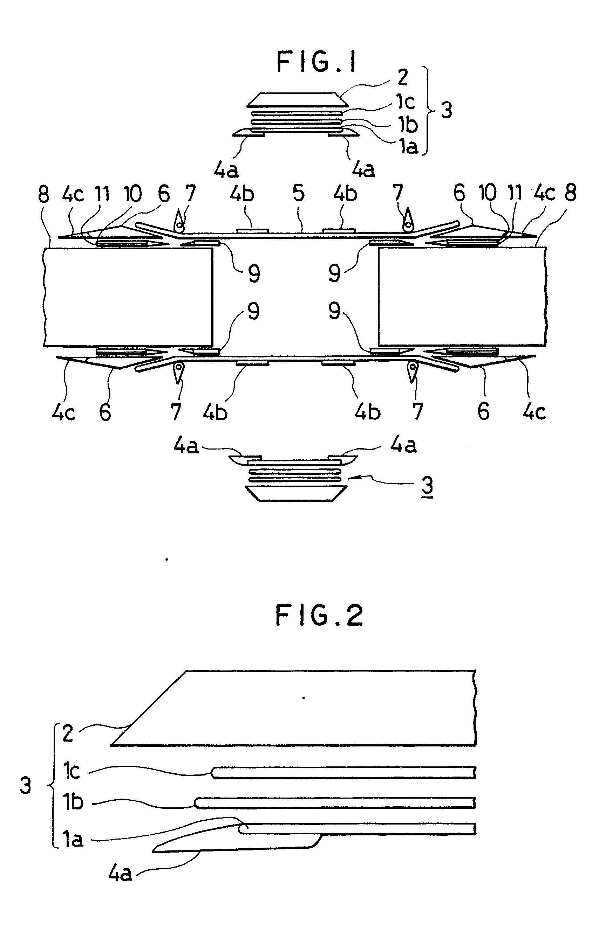

Preliminarily, a belt 1 and a top tread 2 are joined together by means of a BT-drum to form a BT-band 3. At this time, portions 4a are bonded to the innermost first belt layer 1a of three superposed belt layers 1a, 1b and 1c to establish a preset state. These portions 4a occupy 60% or more of a rubber cushion member 4 to be eventually embedded in tyre shoulder portions. These rubber cushion member pieces 4a are bonded to the opposite side edge portions of the first belt layer 1a to project outwards as shown in Fig. 2.

On the other hand, thin, endless belt-shaped rubber cushion member pieces 4b are preliminarily bonded to the outer circumferential surface of a carcass ply 5 at predetermined positions symmetrical in the lateral direction. The carcass ply 5 is formed in a cylindrical shape and is lined with an inner liner. The thickness of these rubber cushion member pieces 4b needs to be a minimum of 0.5mm to maintain the bonding between side treads 6 and the carcass ply 5. It is preferably a maximum of about 5mm to avoid problems in bonding.

Remaining pieces 4c of the rubber cushion member 4 are also preset at the outer side edges of the left and right cylindrical side treads 6 formed in the preceding step.

In this way, the rubber cushion member 4 is severed into three pieces in the preceding step: the piece 4a, occupying 60% or more of the rubber cushion member 4, is held preset in the first belt layer 1a; another piece 4b is held preset in the carcass ply; and the remaining piece 4c is held preset in the side tread.

The above-described members and beads 7 are set out on a forming drum as shown in Fig. 1. Three kinds of bladders 9, 10 and 11 are disposed on the forming drum 8 at laterally symmetrical positions. Considering the beads 7 as boundary positions, the bladder 9 is positioned on the inside, and bladders 10 and 11 are positioned on the outside, overlapping vertically.

At first, side treads 6 are set along the outer circumferences of the right and left bladders 10 and 11, and a carcass ply 5 is fitted to the central portion. At this time, the opposite ends of the carcass ply 5 overlap with parts of the side treads 6. The beads 7 are fitted in the proximity of the overlapping parts.

Then, the BT-band 3 consisting of the belt 1 and the top tread 2 is set at the central position, and preparation for assembly is completed (See Fig. 1).

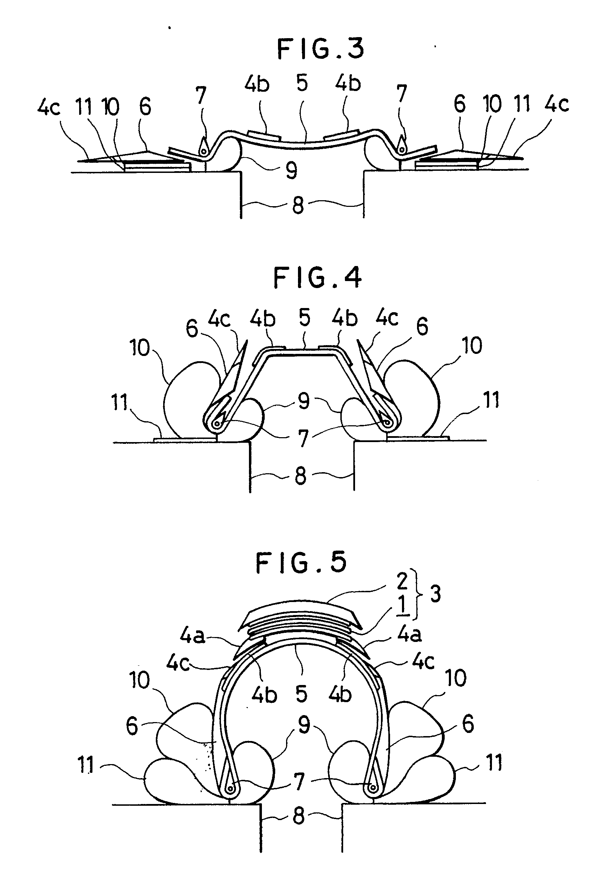

In the following, the forming process will be explained sequentially with reference to Figs. 3 to 5:

The left and right cylindrical portions of the forming drum 8 are made to approach each other, and at the same time, air is fed under pressure into the inside of the bladders 9. Since the opposite end portions of the carcass ply 5 are kept in tight contact with the left and right cylindrical portions of the forming drum 8 via the bladders 9, the carcass ply section on the inside of the beads 7 is raised up as result of swelling of the bladders 9 (as shown in Fig. 3).

Subsequently, when air is fed under pressure into the space inside the carcass ply 5, the left and right cylindrical portions of the forming drum 8 are further swollen thus causing the central portion of the carcass ply 5 to expand outwards. If air is fed under pressure into the bladders 10 simultaneous with the above operation and thereby caused to swell, the carcass ply portion on the outside of the beads 7 and the side treads 6 fold back about the fulcrums formed by the beads 7 (See Fig. 4).

When the above-described shaping proceeds further, the carcass ply 5 causes the distance between the bead 7 to narrow, the expansion proceeds, and results in the formation of a toroidal shape. The folded-back portions of the carcass ply 5 and the side treads 6 come into contact with the inside portion of the carcass ply 5. Then, the bladders 11 are inflated at an appropriate time and, because these bladders 11 protrude so as to push away the bladders 10, the bladders 10 are pushed from below and increase the inward pressing force on the side treads 6. The carcass ply 5 and the side tread 6 are thereby pinched under pressure and bonded together between the bladder 10 and the inner bladder 9 (See Fig. 5).

The pulled and elongated rubber cushion member piece 4b is positioned at the shoulder portion of the carcass ply 5 which is expanded in a toroidal shape. Since the rubber cushion member piece 4b is originally a thin member, it elongates substantially uniformly, and so does not deform the toroidal shape of the carcass ply 5. The rubber cushion member piece 4c is bonded to the rubber cushion member piece 4b at the end portion of the folded back side tread 6 and hence they form a single member.

The BT-band 3 is stuck to the crown portion of the carcass ply 5 expanded in a toroidal shape. At this time, the rubber cushion member pieces 4a, stuck to the opposite side edges of the first belt layer 1a, are bonded with the rubber cushion member pieces 4b on the side of the carcass ply 5, and they become integral.

In this way, the three component rubber cushion member pieces 4a, 4b, and 4c are integrally joined at the tyre shoulder portions.

The rubber cushion 4 produced in this preferred embodiment preferably has a composition such that the weight ratio of natural rubber or IR to SBR or BR is 100/0 - 70/30, the content of carbon black is 20 - 50% by weight, and the content of sulphur is 2 - 5% by weight. The composition also preferably has the exothermic characteristics in that $\tan \delta = 0.07 - 0.15$ (at a room temperature of $20°C$), a modulus of elasticity of 60 - 150 $kg/cm^2$ (300% Mod.), and an anti-rupture property (tensile strength at a breaking elongation of 200 $Kg/cm^2$).

The state where the rubber cushion member pieces 4a, 4b and 4c joined together. in the above-described manner are embedded in a tyre shoulder portion is illustrated in Fig. 6.

Rubber cushion member pieces 4a, positioned at the opposite ends of the first belt layer 1a of the BT-band 3 and occupying most of the rubber cushion member 4, are bonded to the rubber cushion member pieces 4b on the side of the carcass ply 5 elongated jointly with the carcass ply 5, when the BT-band 3 is stuck to a crown portion of an expanded carcass ply 5. Accordingly, the rubber cushion member pieces 4a are embedded with a high precision at predetermined positions in the tyre.

The rubber cushion member piece 4b on the side of the carcass ply 5 is useful for bonding and holding the folded-back side tread 6 and the carcass ply 5, and also supplements a deficiency of the rubber cushion member piece 4a on the side of the BT-band. As described previously, the rubber cushion member pieces 4b on the side of the carcass ply 5 cannot be preset in a large amount, because if these pieces are too thick, there is a possibility that the carcass ply 5 may be distorted upon expansion. Therefore, provision is made so that a deficiency due to the rubber cushion pieces 4a and 4b may be supplemented by the rubber cushion member pieces 4c preset on the side treads 6. Accordingly, in the case where there exists no deficiency, the presetting of rubber cushion member pieces 4c on the side treads 6 is unnecessary.

It is to be noted that, while it may be conceived that the rubber cushion member pieces 4a are to be preset in large amounts on the side of the BT-band 3 so that no deficiency arises, there is a limit to the thickness of the rubber cushion pieces 4a and, in order to preset them in large amounts, it is necessary to provide the rubber cushion pieces 4a with a broad width so that they extend to both the left and right sides. In this case, there is a possibility that upon folding back the side treads 6, the folded-back end portions may be caught on the widely extended rubber cushion member pieces 4a. Moreover, if the extended portions of the rubber cushion member pieces 4a project from the side portions of the top tread, the projected portions would be exposed on the outer surface of the tyre. Such a tyre would have an extremely poor anti-cutting property.

For the above-mentioned reasons, it is not preferable to preset rubber cushion material in large amounts exceeding a certain limit on the side of the BT-band. Therefore, the necessary rubber cushion member is severed, and most of the member is preset on the side of the BT-band within this limit. Thereby occurrence of the above-described inconvenience is prevented, and the precision of the bonding positions of rubber cushions is maintained high. Accordingly, tyres of reproducible quality can always be manufactured.

Owing to the fact that severed rubber cushion member pieces are preset in a preceding step, and the respective constituent elements are set on a forming drum, simultaneous with shaping, folding-back and sticking of side treads and the like, production efficiency is high.

## Claims

1. A method for producing tyres each having a carcass ply, side treads, a belt, a top tread and rubber cushion members embedded in tyre shoulder portions, comprising

i) presetting a plurality of elements of rubber cushion material onto at least both side portions of said belt and at predetermined positions on said carcass ply,

ii) with the carcass ply wrapped around a forming drum, simultaneously folding back said side portions of said carcass ply and said side treads onto said portions to thus form a predetermined shape on said forming drum, and

iii) sticking a BT-band comprising said belt and said top tread to a predetermined position on said shape.

2. A method as claimed in claim 1, wherein severed rubber cushion member pieces are also preset on said side treads.

3. A method as claimed in claim 1 or 2, wherein the thickness of a rubber cushion member preset on the carcass ply is about 0.5mm to 5mm.

4. A method as claimed in claim 1, 2 or 3, wherein a portion occupying 60% or more of the rubber cushion member is preset on the belt.

5. A method as claimed in any preceding claim, wherein said rubber cushion members are preset on the innermost belt layer among a plurality of superposed belt layers.

6. A method as claimed in any preceding claim, wherein the preliminary integrally set BT-band is stuck onto a crown portion of said shaped carcass ply.

# FIG.1

# FIG.2

# FIG.3

# FIG.4

# FIG.5

# FIG.6

# FIG.7

## PRIOR ART

8

# FIG.8

PRIOR ART

# FIG.9

PRIOR ART

9

# FIG. 10

PRIOR ART

05
04 } 06

07        07

03        03

08        08

02

011

# FIG. 11

PRIOR ART

05
04 } 06

07        07
03        03

08        08

02

011